# EUROPÄISCHE PATENTANMELDUNG

(11) **EP 2 589 953 A2**
(43) Veröffentlichungstag der Anmeldung: **08.05.2013**
(21) Anmeldenummer: 12006453.0
(22) Anmeldetag: 14.09.2012
(51) Int. Cl.: G01N 21/954

(54) **Vorrichtung zur Abbildung der Innenfläche eines Hohlraumes in einem Werkstück**

(30) Priorität: 04.11.2011 DE 102011117618
(71) Anmelder: Hommel-Etamic GmbH, 78056 Villingen-Schwenningen (DE)
(72) Erfinder: Rudolf, Michael, 78467 Konstanz (DE); Volk, Raimund, 78056 Villingen-Schwenningen (DE)
(74) Vertreter: Wagner, Carsten

(57) **Zusammenfassung**

Die Erfindung betrifft eine Vorrichtung (2) zur Abbildung der Innenfläche (4) eines Hohlraumes (6) in einem Werkstück (8). Dabei weist die Vorrichtung (2) eine Optik (10) mit Rundumblick auf, die mit einem Bildaufnehmer (12) und einer nachgeordneten Auswertungseinrichtung (14) in Bildübertragungsverbindung steht. Darüber hinaus weist die Vorrichtung (2) eine Beleuchtungsanordnung (16) mit einer Lichtquelle (18) zum Beleuchten eines von der Optik (10) erfassten Abbildungsbereiches der Innenfläche (4) auf. Erfindungsgemäß ist wenigstens ein lichtemittierendes und/oder lichtlenkendes Bauteil (20, 20') der Beleuchtungsanordnung (16) an einer Linse (22), insbesondere einer Frontlinse, der Optik (10) angeordnet.

## Beschreibung

Die Erfindung betrifft eine Vorrichtung der im Oberbegriff des Anspruchs 1 genannten Art zur Abbildung der Innenfläche eines Hohlraumes in einem Werkstück.

Derartige Vorrichtungen werden beispielsweise und insbesondere in der Automobilbranche eingesetzt, um u.a. im Rahmen des Qualitätsmanagements Zylinderbohrungen in Kurbelgehäusen zu prüfen. Die Vorrichtungen werden beispielsweise dazu eingesetzt, die radiale Innenfläche einer Zylinderbohrung abzubilden und dahingehend zu untersuchen, ob sie vorbestimmten Anforderungen hinsichtlich der Oberflächenbeschaffenheit genügt.

Eine entsprechende Vorrichtung ist durch WO 2009/003692 bekannt. Sie weisen eine Optik mit Rundumblick auf, die mit einem Bildaufnehmer und einer nachgeordneten Auswertungseinrichtung in Bildübertragungsverbindung steht. Darüber hinaus weisen die bekannten Vorrichtungen eine Beleuchtungsanordnung zum Beleuchten eines von der Optik erfassten Abbildungsbereiches der Innenfläche auf.

Eine ähnliche Vorrichtung ist durch DE 1 020 090 194 59 A1 bekannt, wobei die Beleuchtungsanordnung relativ zu der Optik derart angeordnet und ihr Strahlengang derart gewählt ist, dass ein erster axialer Abschnitt des Abbildungsbereiches in Hellfeldbeleuchtung und gleichzeitig ein zu dem ersten axialen Abschnitt beabstandeter weiterer axialer Abschnitt des Abbildungsbereiches in Dunkelfeldbeleuchtung beleuchtbar ist.

Durch DE 10 2008 009 975 A1 ist eine Vorrichtung der im Oberbegriff des Anspruchs 1 genannten Art zur Abbildung der Innenfläche eines Hohlraumes in einem Werkstück bekannt, die eine Optik aufweist, die mit einem Bildaufnehmer und einer nachgeordneten Auswertungseinrichtung in Bildübertragungsverbindung steht. Die Vorrichtung weist eine Beleuchtungsanordnung mit einer Lichtquelle zum Beleuchten eines von der Optik erfaßten Abbildungsbereiches der Innenfläche auf. Die Lichtquelle, die beispielsweise als LED-Lichtquelle ausgebildet sein kann, ist mit axialem Abstand zu der Frontlinse der Optik angeordnet und über eine Halterung mechanisch mit der Optik verbunden.

Durch WO 2009/150653 A1 ist eine als medizinisches Endoskop ausgebildete Vorrichtung bekannt, die eine Optik und eine Lichtquelle zum Beleuchten eines von der Optik erfaßten Abbildungsbereiches der Innenfläche aufweist. Die Lichtquelle ist auf einer gedruckten Schaltung angeordnet und befindet sich in unmittelbarer Nähe der Frontlinse der Optik.

Durch US 2009/0082629 A1 ist ein medizinisches Endoskop bekannt, das eine Optik mit einer Frontlinse aufweist, die an einem optischen Element angeordnet ist, dessen der Linse zugewandtes Ende als Spiegel ausgebildet ist. Der Spiegel trägt Leuchtdioden in einer ringförmigen Anordnung, die die Lichtquelle bilden.

Durch US 6,621,516 B1 ist eine Vorrichtung zur Untersuchung von Rohrleitungen bekannt, die eine Panoramaoptik aufweist, die an einem Verfahrwagen angeordnet ist.

Durch US 2006/0164733 A1 ist eine Weitwinkeloptik bekannt, die einen asphärischen optischen Block aufweist, dessen Material so gewählt ist, dass es für einen spezifischen Wellenlängenbereich durchlässig ist. Die bekannte Optik ist insbesondere für eine Verwendung in Überwachungskameras vorgesehen.

Der Erfindung liegt die Aufgabe zugrunde, eine Vorrichtung der im Oberbegriff des Anspruchs 1 genannten Art zur Abbildung der Innenfläche eines Hohlraumes in einem Werkstück anzugeben, deren Verwendbarkeit durch eine reduzierte Baugröße erweitert ist.

Diese Aufgabe wird durch die im Anspruch 1 angegebene Erfindung gelöst.

Die Erfindung löst sich von dem Gedanken, die Bestandteile einer Vorrichtung in ihren Abmessungen zu reduzieren, um dadurch eine geringere Baugröße zu erreichen.

Vielmehr liegt der Erfindung der Gedanke zugrunde, den Aufbau einer Vorrichtung zur Abbildung der Innenfläche eines Hohlraumes in einem Werkstück zu verändern, um dadurch insbesondere in einer geometrischen Dimension dieser Vorrichtung die Baugröße zu verringern, wodurch eine Verwendung auch in vergleichsweise kleinen Hohlräumen ermöglicht ist.

So werden beispielsweise im Bereich des Automobilbaus stetig höhere Anforderungen an die Umweltverträglichkeit eines Verbrennungsmotors gestellt. Um diese einhalten zu können, wird u.a. der Hubraum eines Motors verringert. Diese Hubraumreduzierung wird vielfach durch Reduzierung der Durchmesser der Zylinderbohrung für die entsprechend angepassten Kolben des Verbrennungsmotors erreicht. Um beispielsweise die Innenfläche dieser hubraumreduzierten Hohlräume eines Kurbelgehäuses prüfen zu können, sieht die Erfindung vor, dass eine Linse der Optik wenigstens ein lichtemittierendes und/oder lichtlenkendes Bauteil der Beleuchtungsanordnung trägt. Erfindungsgemäß ist somit wenigstens ein lichtemittierendes und/oder lichtlenkendes Bauteil unmittelbar, d.h. ohne Zwischenschaltung weiterer Bauteile, an wenigstens einer Linse der Optik befestigt. Zu dem lichtemittierenden und/oder lichtlenkenden Bauteil in diesem Sinne gehören alle seine optischen, elektrischen/elektronischen und mechanischen Komponenten, beispielsweise bei einer LED das Halbleiterbauteil, seine Optik sowie seine Halterung/Fassung.

Der Vorteil, der sich durch eine erfindungsgemäße Vorrichtung ergibt, liegt u.a. darin, dass der für die Auswertung relevante Bereich der Optik frei bleiben kann und insbesondere nicht durch beispielsweise eine Halterung für ein lichtemittierendes und/oder lichtlenkendes Bauteil der Beleuchtungsanordnung eingeschränkt wird. Daran anknüpfend ergibt sich der Vorteil, dass lediglich eine Bildaufnahme des durch die Optik mit Rundumblick erfassten Abbildungsbereiches notwendig ist, um eine entsprechende Prüfung der Innenfläche durchführen zu können. Dadurch resultiert u.a. eine schnelle Abbildung der Innenfläche eines betreffenden Hohlraumes in einem Werkstück, da beispielsweise eine weitere Abbildung, bei der die Halterung für ein lichtemittierendes und/oder lichtlenkendes Bauteil der Beleuchtungsanordnung gegenüber der Optik gedreht ist, entfällt.

Erfindungsgemäß wird unter einer Linse einer Optik ein optisch wirksames, wenigstens teilweise aus Glas oder einem anderen transparenten Medium bestehendes Bauelement mit Lichtbrechungsflächen verstanden, von denen wenigstens eine Fläche beispielsweise und insbesondere konvex oder konkav geformt ist, so dass das die Linse passierende Licht an dieser Fläche entsprechend gebrochen wird. Darüber hinaus wird unter einer Frontlinse eine Linse verstanden, die die von der Innenfläche reflektierten Lichtstrahlen als erste Linse der Vorrichtung lichttechnisch bricht. Unter der Frontlinse wird damit erfindungsgemäß die in Einführrichtung der Vorrichtung in den Hohlraum des Werkstücks gesehen vordere Linse der Optik verstanden.

Erfindungsgemäß wird unter einem lichtemittierenden Bauteil ein Bauteil verstanden, das Licht erzeugt und/oder wenigstens über einen Teil seiner Oberfläche an die zu beleuchtende Umgebung abgibt.

Erfindungsgemäß kann ein lichtemittierendes Bauteil auch durch einen Lichtleiter gebildet sein, wobei die Lichtquelle entfernt vom dem Lichtaustritt angeordnet sein kann. Beispielsweise kann ein lichtemittierendes Bauteil ein Lichtleiter mit einer dem Lichtleiter zugeordneten Lichtquelle sein, an dessen dem Lichtaustrittsende gegenüberliegendem Ende die Lichtquelle angeordnet ist, wodurch das Licht durch den Lichtleiter bis zum Lichtaustrittsende des Lichtleiters geleitet werden kann.

Erfindungsgemäß dient ein lichtlenkendes Bauteil insbesondere dazu, die Richtung des Lichts zu verändern.

Erfindungsgemäß können lichtlenkende Bauteile insbesondere durch Spiegel, Prismen, Blenden wie auch Linsen bzw. eine Kombination der zuvor genannten Bauteile gebildet sein.

Die Anordnung eines lichtemittierenden und/oder lichtlenkenden Bauteiles an einer Linse der Optik kann auf unterschiedliche Art und Weise vorgenommen werden. Beispielsweise kann das zuvor genannte Bauteil an die Linse angeklebt oder mittels einer Halterung an der Linse befestigt sein. Diese Halterung kann wiederum z.B. mit der Linse verklebt oder auf andere Weise verbunden sein.

Darüber hinaus ist es möglich, dass das von der Lichtquelle zum Beleuchten eines von der Optik erfassten Abbildungsbereiches der Innenfläche emittierte Licht durch eine Ausnehmung, insbesondere eine Durchgangsöffnung der Linse, geführt wird. Dies kann u.a. auch durch einen Lichtleiter, vorzugsweise ein Glasfaserkabel, erfolgen. Ferner kann auch eine Verspiegelung der Ausnehmung dazu dienen, das Licht weiterzuleiten.

Um das Erfassungsvermögen einer erfindungsgemäßen Vorrichtung zur Abbildung der Innenfläche eines Hohlraumes in einem Werkstück möglichst nicht zu beeinträchtigen, sieht eine weitere vorteilhafte Weiterbildung der Erfindung vor, dass das lichtemittierende und/oder lichtlenkende Bauteil außerhalb eines für die Abbildung der Innenfläche herangezogenen Blickfeldes der Optik angeordnet ist. Beispielsweise ist bei der Prüfung der Oberflächenbeschaffenheit einer Zylinderdurchgangsbohrung eine Abbildung über nur einen Teilbereich der Optik ausreichend für die daran anknüpfende Auswertung. Daher kann der nicht genutzte Bereich der Optik für das Halten eines lichtemittierenden und/oder lichtlenkenden Bauteiles verwendet werden, ohne dass sich daraus eine Einbuße für die Auswertung ergibt. So kann beispielsweise die Optik bei der Prüfung der Innenfläche eines Zylinders auf der optischen Achse bzw. im Bereich der optischen Achse mit einer Ausnehmung versehen sein, da dieser Bereich der Optik für eine Abbildung und daran anschließende Auswertung in der Regel nicht benötigt wird.

Vor diesem Hintergrund ist eine weitere vorteilhafte Weiterbildung der Erfindung dadurch gekennzeichnet, dass das Bauteil im Bereich eines Scheitelpunktes oder an einem Scheitelpunkt an der Frontlinse der Optik angeordnet ist. Dadurch ergibt sich - wie zuvor bereits festgestellt - der Vorteil, dass der für die nachfolgende Auswertung relevante Abbildungsbereich der Optik frei bleibt.

Wie ebenfalls bereits zuvor festgestellt, ist in einigen Anwendungsfällen der Bereich um die optische Achse (Zenitachse) der Optik für die Auswertung irrelevant, so dass es vorteilhaft ist, das lichtemittierende und/oder lichtlenkende Bauteil in diesem Bereich anzuordnen. Daher sieht eine vorteilhafte Weiterbildung der Erfindung vor, dass das lichtemittierende und/oder lichtlenkende Bauteil auf der optischen Achse oder im Bereich der optischen Achse der Optik angeordnet ist.

Die geometrische Anordnung des lichtemittierenden und/oder lichtlenkenden Bauteiles an der Linse, insbesondere der Frontlinse, der Optik kann auf verschiedene Art und Weise vorgenommen werden. So kann das Bauteil an einem proximalen oder distalen Ende der Optik angeordnet sein. Vorteilhafterweise ist das lichtemittierende und/oder lichtlenkende Bauteil jedoch an dem distalen Ende der Optik angeordnet, wodurch u.a. die Lichtleistung nicht durch weitere optische Elemente oder Hindernisse gemindert wird und somit verlustarm auf den zu erfassenden Abbildungsbereich der Innenfläche gerichtet werden kann. Dementsprechend ist in einer weiteren vorteilhaften Weiterbildung der Erfindung vorgesehen, dass das lichtemittierende und/oder lichtlenkende Bauteil an dem distalen Ende der Optik angeordnet ist.

Erfindungsgemäß wird unter einem distalen Ende der Optik das in Einführrichtung vordere Ende der Optik verstanden.

Zur Beleuchtung eines von der Optik erfassten Abbildungsbereiches der Innenfläche kann das von einer Lichtquelle erzeugte Licht auf verschiedene Art und Weise umgelenkt werden, wozu - wie bereits genannt - u.a. ein Prisma oder eine Linse dienen kann. Auf einfache und kostengünstige Weise ist eine Umlenkung des Lichts mittels eines Spiegels oder mehrerer Spiegel möglich, so dass eine weitere vorteilhafte Weiterbildung der Erfindung vorsieht, dass das lichtlenkende Bauteil wenigstens einen Spiegel aufweist.

Die Beleuchtung eines von der Optik erfassten Abbildungsbereiches der Innenfläche kann auf unterschiedliche Art und Weise realisiert werden. Beispielsweise ist es möglich, eine Lichtquelle an dem proximalen Ende der Vorrichtung anzuordnen und das Licht mittels eines Lichtleiters an den gewünschten Bereich der Vorrichtung zur Lichtemission weiterzuleiten. Auf diese Weise kann z.B. die Wärmeentstehung im Bereich der Linse reduziert werden, um Abbildungs- bzw. Messfehler zu verringern.

Demgegenüber ist es auch möglich, auf eine Lichtleitung zu verzichten, indem das lichtemittierende Bauteil ein Lichtquellenelement ist, dem Energieversorgungsmittel zugeordnet sind. Diesbezüglich ist es möglich, das Licht im Nahbereich des zu erfassenden Abbildungsbereiches der Innenfläche zu erzeugen, um Energieverluste möglichst gering zu halten. Zur Versorgung dieses Lichtquellenelementes mit Energie dienen Energieversorgungsmittel, die auf einfachste Art und Weise durch eine elektrische Energiequelle und damit verbundene elektrischen Leitungen realisiert werden können. Diese Leitungen können beispielsweise in einem für die Erfassung des Abbildungsbereiches der Innenfläche vernachlässigbaren Bereich der Optik angeordnet werden, um sie schließlich mit einem Lichtquellenelementes elektrisch zu verbinden. Die Leitungen können beispielsweise durch eine Ausnehmung in der Optik, beispielsweise eine Durchgangsbohrung, hindurchgeführt werden, wobei sich die Ausnehmung in einem räumlichen Bereich der Optik befinden kann, der zu einer Abbildung der Innenfläche nicht herangezogen wird.

Die Versorgung eines Lichtquellenelementes kann auf unterschiedliche Art und Weise vorgenommen werden. So kann die zum Betreiben eines Lichtquellenelementes notwendige Energie leitungsgebunden wie auch leitungsungebunden diesem zugeführt werden.

Vor diesem Hintergrund sieht eine vorteilhafte Weiterbildung der Erfindung vor, dass die Energieversorgungsmittel derart ausgestaltet sind, dass Energie leitungsungebunden zu dem Lichtquellenelement übertragbar ist oder übertragen wird. Dadurch ergibt sich der Vorteil, dass elektrische Leitungen nicht in besonderer Art und Weise geführt werden müssen, um das Blickfeld der Optik nicht zu beeinträchtigen. Ferner kann auf diese Art und Weise ein modularer Aufbau der Vorrichtung begünstigt werden.

Die leitungsungebundene Energieübertragung kann auf unterschiedliche Weise realisiert werden, beispielsweise mittels elektromagnetischer Induktion vorgenommen werden. Diesbezüglich sieht eine weitere vorteilhafte Weiterbildung der Erfindung vor, dass die Energieversorgungsmittel wenigstens eine Induktionsspulenanordnung aufweisen. Bei dieser Ausführungsform ist die Energieversorgung des Lichtquellenelementes berührungslos ermöglicht, und zwar auch dann, wenn das Lichtquellenelement einen hohen Energiebedarf hat. Ferner ist es bei dieser Ausführungsform auf besonders einfache Weise möglich, wenigstens zwei oder mehrere Lichtquellenelemente mit elektrischer Leistung zu versorgen.

Um das Blickfeld der Optik durch die Induktionsspulenanordnung unbeeinträchtigt zu lassen, sieht eine weitere vorteilhafte Weiterbildung der Erfindung vor, dass wenigstens eine Spule der Induktonsspulenanordnung außerhalb eines für die Abbildung der Innenfläche herangezogenen Blickfeldes der Optik angeordnet ist.

Eine Weiterbildung der vorgenannten Ausführungsform sieht vor, dass die Spule eine Empfangsspule ist.

Darüber hinaus ist es möglich, die leitungsungebundene Energieübertragung wenigstens teilweise um eine leitungsgebundene Energieversorgung zu ergänzen bzw. zu ersetzen. Diesbezüglich sieht eine weitere vorteilhafte Weiterbildung der Erfindung vor, dass das Lichtquellenelement über wenigstens eine Versorgungsleitung mit den Energieversorgungsmitteln verbunden ist. Auf diese Weise kann die Energieversorgung des Lichtquellenelementes mit einfachen Mitteln realisiert werden. Beispielsweise ist es möglich, dass, sofern das Lichtquellenelement elektrisch betrieben wird, elektrische Leitungen verwendet werden, die in einem das Blickfeld der Optik nicht beeinträchtigenden Bereich von den Energieversorgungsmitteln zum Lichtquellenelement geführt werden.

Eine andere Weiterbildung der Erfindung sieht vor, dass wenigstens eine Elektrode zur elektrischen Verbindung der Versorgungsleitung mit dem Lichtquellenelement aus einem optisch transparenten Material besteht. Eine Elektrode aus einem optisch transparenten oder annähernd transparenten Material kann beispielsweise mittels einer Beschichtung realisiert werden, die z.B auf die Optik aufgebracht ist. Diese Möglichkeit ist in einer weiteren vorteilhaften Weiterbildung dadurch berücksichtigt, dass wenigstens eine Elektrode eine Beschichtung einer Linse der Optik bildet. Dabei ist es möglich, dass die Elektrode wenigstens abschnittsweise eine Beschichtung der Linse der Optik bildet. Darüber hinaus ist es möglich, dass die Linse segmentweise beschichtet wird, wodurch mittels der Beschichtung verschiedene Elektroden auf der Linse gebildet werden können.

Darüber hinaus ist es auf diese Weise möglich, verschiedene elektrische Verbraucher in verschiedenen Bereichen der Optik bzw. der Linse zu platzieren und mit der notwendigen Energie zu versorgen.

Die Beleuchtung eines von der Optik erfassten Abbildungsbereiches der Innenfläche kann auf unterschiedliche Art und Weise erfolgen. So kann beispielsweise - wie zuvor bereits genannt - ein Lichtquellenelement verwendet werden, welches beispielsweise mittels wenigstens einer LED gebildet werden kann.

Darüber hinaus ist es möglich, das lichtemittierende Bauteil von außen anzuregen. Hierzu sieht eine weitere vorteilhafte Weiterbildung der Erfindung vor, dass das lichtemittierende Bauteil wenigstens ein Leuchtstoffelement aufweist, das bei Anregung mit elektromagnetischer Strahlung Licht erzeugt. Die Anregung zur Lichtabgabe kann auf unterschiedliche Art und Weise erfolgen. So kann beispielsweise mittels Lumineszenz eine erfindungsgemäße Beleuchtung eines von der Optik erfassten Abbildungsbereiches der Innenfläche erfolgen. Diesbezüglich kann z.B. ein fluoreszierender bzw. phosphoreszierender Körper als erfindungsgemäßes Leuchtstoffelement verwendet werden, das bei Anregung mit elektromagnetischer Strahlung Licht erzeugt.

Darüber hinaus ist eine weitere vorteilhafte Weiterbildung der Erfindung dadurch gegeben, dass die Beleuchtungsanordnung relativ zu der Optik derart angeordnet und ihr Strahlengang derart gewählt ist, dass ein erster axialer Abschnitt des Abbildungsbereiches in der Hellfeldbeleuchtung und gleichzeitig ein zu dem ersten axialen Abschnitt beabstandeter zweiter axialer Abschnitt des Abbildungsbereiches in Dunkelfeldbeleuchtung beleuchtbar ist oder beleuchtet wird.

Auf diese Weise ergibt sich der Vorteil, dass ein von der Optik erfasster Abbildungsbereich der Innenfläche teilweise in Hellfeldbeleuchtung und teilweise in Dunkelfeldbeleuchtung beleuchtet werden kann. In Hellfeldbeleuchtung, bei der das von der abzubildenden Innenfläche reflektierte Licht zur Abbildung genutzt wird, ergibt sich eine besonders kontrastreiche Abbildung, mit der beispielsweise und insbesondere Kratzer und Porositäten in der abzubildenden Innenfläche festgestellt werden können. Demgegenüber lassen sich bei einer Dunkelfeldbeleuchtung, bei der der Strahlengang des Lichtes so geführt ist, dass zur Abbildung vor allem an der abzubildenden Innenfläche gestreute Strahlen herangezogen werden, um andere Strukturdefekte, beispielsweise bei Gußteilen Gießfehler, festzustellen. Hierbei ist es möglich, die abzubildende Innenfläche sowohl in Hellfeldbeleuchtung als auch in Dunkelfeldbeleuchtung abzubilden. Eine derart ausgeführte Vorrichtung kombiniert somit die hinsichtlich der Erfassung von Defekten bestehenden Vorteile beider Beleuchtungsverfahren.

Es ist jedoch bei einer entsprechend ausgeführten erfindungsgemäßen Vorrichtung möglich, ein und denselben axialen Abschnitt der abzubildenden Innenfläche zeitlich aufeinanderfolgend sowohl in Dunkelfeldbeleuchtung als auch in Hellfeldbeleuchtung abzubilden. Beispielsweise kann der Vorrichtung hierzu eine Vorschubeinrichtung zugeordnet sein, mittels derer die Vorrichtung relativ zu der abzubildenden Innenfläche axial bewegbar ist. Befindet sich beispielsweise ein in Dunkelfeldbeleuchtung untersuchter Abschnitt der Innenfläche in Vorschubrichtung schräg vor der Optik, während sich ein in Hellfeldbeleuchtung untersuchter Abschnitt in Axialrichtung des Hohlraumes etwa auf Höhe der Optik oder etwas hinter dieser befindet, so kann ein vorbestimmter axialer Bereich der Innenfläche während des Vorschubes zunächst in Dunkelfeldbeleuchtung und bei einem weiteren Vorschub der Vorrichtung daran anschließend in Hellfeldbeleuchtung abgebildet werden.

Zum Gegenstand der Erfindung gehört auch eine Kombination einer erfindungsgemäßen Beleuchtungsanordnung, bei der ein lichtemittierendes und/oder lichtlenkendes Bauteil an einer Linse der Optik angeordnet ist, mit einer aus der DE 10 2009 019 459 A1 bekannten Beleuchtungsanordnung, bei der ein lichtemittierendes bzw. lichtlenkendes Bauteil nicht an einer Linse der Optik, sondern an einem anderen Bauteil der Vorrichtung angeordnet ist.

Der erfindungsgemäße Grundgedanke, ein lichtemittierendes oder lichtlenkendes Bauteil an einer Linse, insbesondere einer Frontlinse, der Optik anzuordnen, kann auch allgemein bei abbildenden Vorrichtungen verwendet werden, die eine Optik und einen Bildaufnehmer aufweisen. In diesem Fall ist sowohl eine nachgeordnete Auswertungseinrichtung als auch eine Beleuchtungsanordnung nicht zwingend vorhanden.

Die Erfindung wird nachfolgend anhand der beigefügten Zeichnung näher erläutert, in der stark schematisiert Ausführungsbeispiele einer erfindungsgemäßen Vorrichtung dargestellt sind. Dabei bilden alle beschriebenen, in der Zeichnung dargestellten und in den Patentansprüchen beanspruchten Merkmale für sich genommen sowie in beliebiger technisch sinnvoller Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Zur besseren Übersicht sind die Darstellungen in den Figuren auf die das Verständnis unterstützenden Elemente reduziert. In den Figuren sind gleiche oder sich entsprechende Bau-/Bestandteile bzw. Elemente mit den gleichen Bezugszeichen versehen.

Es zeigt:
- Fig. 1: eine schematisierte Seitenansicht eines ersten Ausführungsbeispieles einer erfindungsgemäßen Vorrichtung in Abbildungsposition,
- Fig. 2: ein zweites Ausführungsbeispiel einer erfindungsgemäßen Vorrichtung in gleicher Darstellung wie in Fig. 1,
- Fig. 3: ein drittes Ausführungsbeispiel einer erfindungsgemäßen Vorrichtung in gleicher Darstellung wie Fig. 1,
- Fig. 4: ein viertes Ausführungsbeispiel einer erfindungsgemäßen Vorrichtung in gleicher Darstellung wie in Fig. 1,
- Fig. 5: ein fünftes Ausführungsbeispiel einer erfindungsgemäßen Vorrichtung in der gleichen Darstellungsweise wie in Fig. 1.

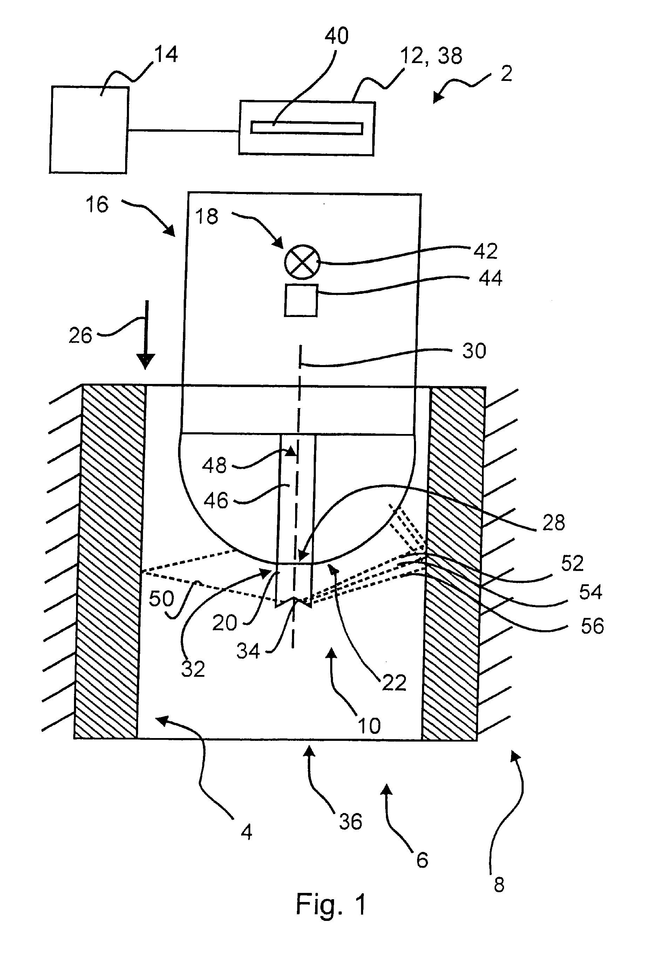

In Fig. 1 ist ein erstes Ausführungsbeispiel einer erfindungsgemäßen Vorrichtung 2 zur Abbildung der Innenfläche 4 eines Hohlraumes 6 in einem Werkstück 8 stark schematisiert in einer Seitenansicht dargestellt. Die Vorrichtung 2 weist eine Optik 10 mit Rundumblick auf, die mit einem Bildaufnehmer 12 und einer nachgeordneten Auswertungseinrichtung 14 in Bildübertragungsverbindung steht. Ferner weist die Vorrichtung 2 eine Beleuchtungsanordnung 16 mit einer Lichtquelle 18 zum Beleuchten eines von der Optik 10 erfassten Abbildungsbereiches der Innenfläche 4 auf. Zur Beleuchtung ist in diesem Ausführungsbeispiel ein lichtlenkendes Bauteil 20 vorgesehen, dass an einer Linse, die in diesem Fall die Frontlinse 22 ist, der Optik 10 angeordnet ist.

Bei diesem Ausführungsbeispiel trägt die Frontlinse 22 das lichtlenkende Bauteil 20. Ferner ist das lichtlenkende Bauteil 20 außerhalb eines für die Abbildung der Innenfläche 4 herangezogenen Blickfeldes der Optik 10 angeordnet. Dabei ist das lichtlenkende Bauteil 20 im Bereich des Scheitelpunktes 28 der Frontlinse 24 angeordnet und zwar derart, dass das lichtlenkende Bauteil 20 auf der optischen Achse 30 (Zenitachse) der Optik 10 angeordnet ist. Darüber hinaus ist durch die zuvor genannte Anordnung das lichtlenkende Bauteil 20 an dem distalen Ende 32 der Optik 10 angeordnet.

Bei diesem Ausführungsbeispiel ist das lichtlenkende Bauteil 20 durch einen Spiegel 34 gebildet, der die darauf auftreffenden Lichtstrahlen entsprechend verteilt, um den zu erfassenden Abbildungsbereich der Innenfläche 4 zu beleuchten.

Darüber hinaus ist in diesem Ausführungsbeispiel die Beleuchtungsanordnung 16 relativ zu der Optik 10 derart angeordnet und ihr Strahlengang derart gewählt, dass ein erster axialer Abschnitt des Abbildungsbereiches in der Hellfeldbeleuchtung und gleichzeitig ein zu dem ersten axialen Abschnitt beabstandeter zweiter axialer Abschnitt des Abbildungsbereiches in Dunkelfeldbeleuchtung beleuchtet ist.

Die Optik 10 ist derart ausgebildet, dass sie einen Rundumblick von 360° ermöglicht, um den Hohlraum 6, der in diesem Ausführungsbeispiel ein Zylinder 36 ist, in seiner Umfangsrichtung vollständig zu erfassen.

Der Bildaufnehmer 12 ist bei diesem Ausführungsbeispiel durch eine Digitalkamera 38 mit einem Bildsensor 40 gebildet.

Bei dem in Fig. 1 dargestellten Ausführungsbeispiel handelt es sich bei der Optik 10 um ein rein brechungsoptisch abbildendes Fisheye-Objektiv.

Bei dem dargestellten Ausführungsbeispiel weist die Optik 10 - mit Ausnahme des Winkelbereiches, in dem das lichtlenkende Bauteil 20 angeordnet ist - einen Blickwinkel von > 180°, nämlich ca. 185°, auf, so dass die Optik 10 nicht nur einen schräg vor der Frontlinse 24 der Optik 10 liegenden Bereich der Innenfläche 4 erfasst, sondern auch einen entlang der optischen Achse 30 gegenüber der Frontlinse 24 der Optik 10 zurückliegenden Bereich der Innenfläche 4.

Bei dem dargestellten Ausführungsbeispiel ist der Bildsensor 40 zur Erfassung des gesamten Bildkreises der Optik 10 ausgebildet. Von der Optik 10 aufgenommene Bilder der Innenfläche 4 werden von dem Bildsensor 40 des Bildaufnehmers 12 aufgezeichnet und in einer nicht dargestellten Speichereinrichtung abgespeichert.

Zur Beleuchtung des Abbildungsbereiches der Innenfläche 4 ist eine Lichtquelle 18 vorgesehen, die bei diesem Ausführungsbeispiel durch eine LED 42 mit nachgeordnetem Lichtstrahlformungelement 44 zur im wesentlichen parallelen Ausrichtung der von der LED 42 emittierten Lichtstrahlen gebildet und entfernt von dem lichtlenkenden Bauteil 20 angeordnet ist.

Um die von der LED 42 emittierten und durch das Lichtstrahlformungselement 44 ausgerichteten Lichtstrahlen an das lichtlenkende Bauteil 20 zu führen, weist die Frontlinse 24 eine Ausnehmung 46 auf, durch die die Lichtstrahlen zum lichtlenkenden Bauteil 20 geführt werden.

Die Innenfläche 48 der Ausnehmung 46 ist mechanisch lediglich fein bearbeitet. Die Ausnehmung 46 kann aber auch beispielsweise an der Innenfläche 48 verspiegelt ausgeführt sein.

Die Ausnehmung 46 ist in diesem Ausführungsbeispiel durch eine Durchgangsbohrung durch die Frontlinse 24 gebildet, wobei die Achse (nicht dargestellt) der Durchgangsbohrung mit der optischen Achse 30 der Optik 10 zusammenfällt. Die von der LED 42 erzeugten Lichtstrahlen treffen nach Durchlaufen der Ausnehmung 46 auf den Spiegel 34, der geometrisch so geformt ist, dass die zuvor genannte Hellfeld- und Dunkelfeldbeleuchtung ermöglicht wird. Über den Spiegel 32 werden die von der LED 42 emittierten Lichtstrahlen auf die Innenfläche 4 des Hohlraumes 6 gelenkt und von dieser reflektiert. Dabei trifft zur Abbildung der Innenfläche 4 ein erster Teilstrahl 50 derart auf die Innenfläche 4 auf, dass ein erster axialer Abschnitt der Innenfläche 4 in Hellfeldbeleuchtung beleuchtet wird. Diese Art der Beleuchtung wird stellvertretend anhand des Teilstrahles 50 in der Figur 1 symbolisch dargestellt. Stellvertretend für die Dunkelfeldbeleuchtung sind die Teilstrahlen 52, 54 und 56 mit ihrer Reflektion an der Innenfläche symbolisch in Figur 1 dargestellt.

Während des Vorschubs der Vorrichtung 2 relativ zu dem Werkstück 8 werden aufeinanderfolgend unterschiedliche axiale Bereiche der Innenfläche 4 abgebildet und in der Auswertungseinrichtung 14 in Bilder umgesetzt, die jeweils einer Abwicklung der Innenfläche 4 entsprechen.

Weitere Informationen zur Hellfeld- und Dunkelfeldbeleuchtung können der DE 10 2009 019 459 A1 entnommen werden. Darüber hinaus können beispielsweise DE 10 2007 031 358 A1 Informationen zur Art und Weise, wie die Auswertungseinrichtung 14 die auf dem Bildsensor 40 abgebildeten Bereiche in ein kartesisches Bild umsetzt, entnommen werden. Der Offenbarungsgehalt der zuvor genannten Schriften wird hiermit durch Bezugnahme in die vorliegende Anmeldung aufgenommen.

Anhand der in Hellfeldanordnung bzw. Dunkelfeldanordnung aufgenommenen Bilder kann festgestellt werden, ob die zu untersuchende Innenfläche 4 hinsichtlich ihrer Oberflächenbeschaffenheit vorbestimmten Anforderungen genügt.

Im folgenden werden zur besseren Übersicht lediglich die zum ersten Ausführungsbeispiel der Figur 1 in den nachfolgenden Figuren dargestellten Unterschiede erläutert.

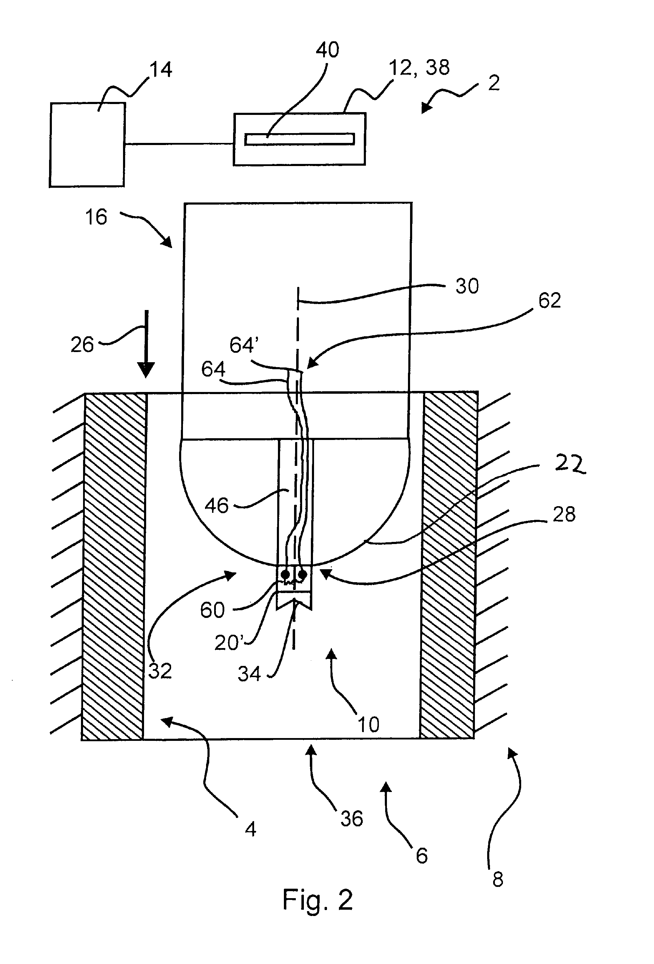

Figur 2 zeigt ein zweites Ausführungsbeispiel einer erfindungsgemäßen Vorrichtung 2, bei der ein lichtemittierendes und lichtlenkendes Bauteil 20' am Scheitelpunkt 28 der Frontlinse 22 angeordnet ist. Das Bauteil 20' weist zur Erzeugung des für die Beleuchtung der Innenfläche 4 benötigten Lichtes ein Lichtquellenelement 60 auf, dem Energieversorgungsmittel 62 zugeordnet sind. Zur Energieversorgung des lichtemittierenden und lichtlenkenden Bauteiles 20' dienen Versorgungsleitungen 64, 64', die in diesem Ausführungsbeispiel auf einfache sowie kostengünstige Art und Weise durch elektrische Versorgungsleitungen 64, 64' gebildet sind, die dem lichtemittierenden und lichtlenkenden Bauteil 20' die zum Betreiben des Lichtquellenelementes 60 notwendige elektrische Energie zuführen.

Die Versorgungsleitungen 64, 64' werden über die Ausnehmung 46 durch die Frontlinse 24 geführt. Die Ausnehmung 46 ist wiederum als zylinderförmige Durchgangsbohrung durch die Frontlinse 24 ausgebildet.

Die Versorgungsleitungen 64, 64' sind für die Energieübertragung sowohl mit einer elektrischen Energiequelle (nicht dargestellt) als auch mit dem lichtemittierenden und lichtlenkenden Bauteil 20' elektrisch verbunden.

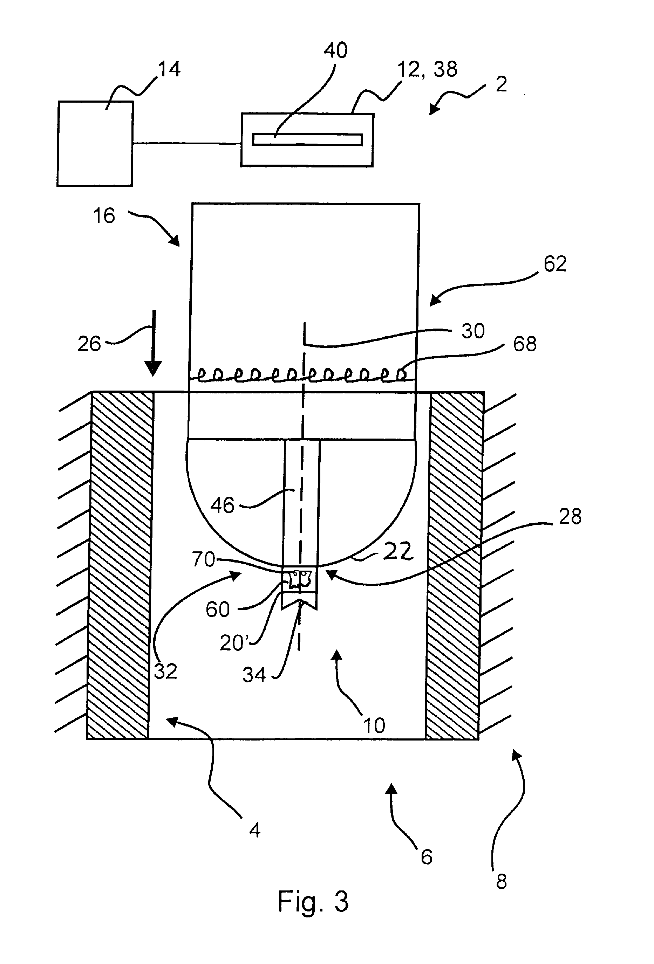

Figur 3 zeigt ein drittes Ausführungsbeispiel einer erfindungsgemäßen Vorrichtung 2, bei der das lichtemittierende und lichtlenkende Bauteil 20' zur Lichterzeugung mittels Induktion mit Energie versorgt wird. Dazu weisen die Energieversorgungsmittel 62 eine Induktionsspulenanordnung 66 auf, die eine Sendespule 68 und eine Empfangsspule 70, aufweist.

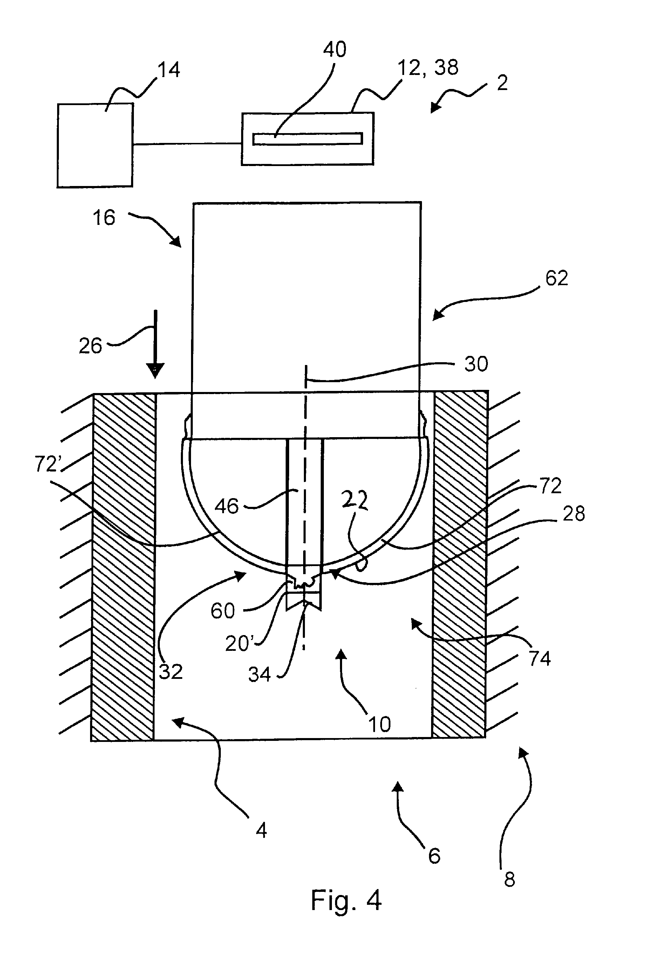

Figur 4 zeigt ein viertes Ausführungsbeispiel einer erfindungsgemäßen Vorrichtung 2, bei der Elektroden 72, 72' zur elektrischen Verbindung der jeweiligen Versorgungsleitung 64, 64' mit dem Lichtquellenelement 60 jeweils aus einem optisch transparenten Material bestehen. Dabei bilden die Elektroden 72, 72' eine Beschichtung 74 der Frontlinse 24.

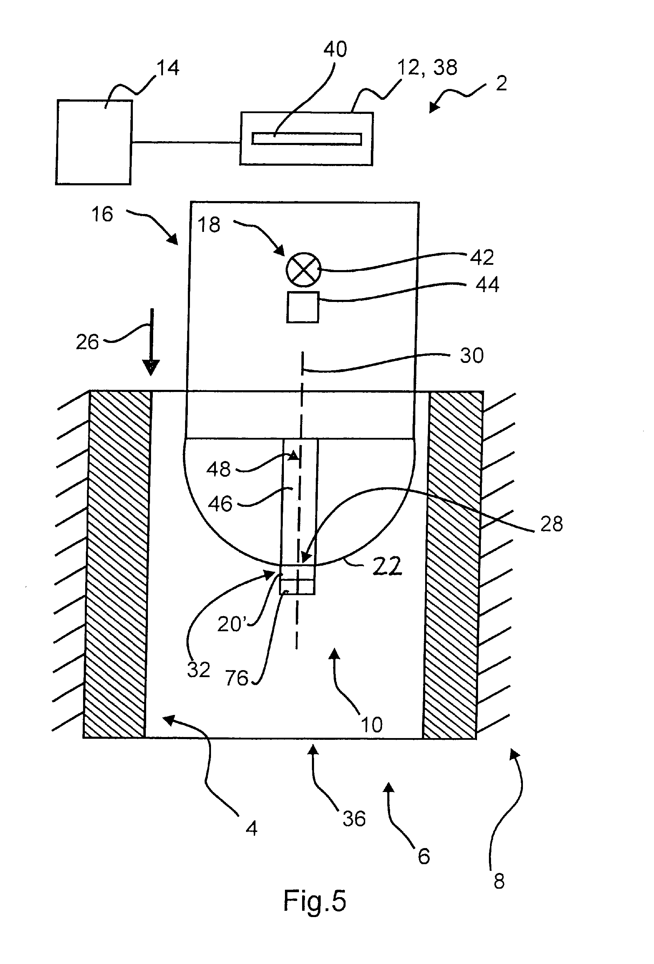

Figur 5 zeigt ein fünftes Ausführungsbeispiel einer erfindungsgemäßen Vorrichtung 2. Dabei weist das lichtemittierende Bauteil 20 ein Leuchtstoffelement 76 auf, das bei Anregung mit elektromagnetischer Strahlung Licht erzeugt. Die elektromagnetische Strahlung kann in Form von Licht wie im ersten Ausführungsbeispiel mittels einer entfernt von dem Leuchtstoffelement 76 angeordneten Lichtquelle 18 erzeugt werden, die wiederum durch eine LED 42 gebildet sein kann. Das von der LED 42 erzeugte Licht kann auf gleiche Weise wie beim ersten Ausführungsbeispiel mittels einer Ausnehmung 46 in der Frontlinse 24 zum Leuchtstoffelement 76 geführt werden. Das Leuchtstoffelement 76 weist zur Erzeugung von Licht einen phosphoreszierenden Werkstoff auf.

Eine mögliche Abwandlung des Ausführungsbeispieles gemäß Fig. 5 besteht darin, auf die Ausnehmung 46 zu verzichten und das Licht unmittelbar durch die optische Achse der Optik 10 zu dem Leuchtstoffelement 76 zu leiten. Eine dabei ggf. auftretende Strahlverformung kann mittels des Lichtstrahlformungselementes 44 gegenkompensiert werden. Sowohl bei dem Ausführungsbeispiel gemäß Fig. 5 als auch bei der zuvor beschriebenen Abwandlung kann vor dem Bildaufnehmer 12 ein optisches Filter angeordnet sein, das Licht aus dem Leuchtstoffelement 76 ungehindert oder annähernd ungehindert passieren lässt, das von der Lichtquelle 18 emittierte Licht jedoch sperrt. Auf diese Weise ist verhindert, dass Streulicht aus der Beleuchtung zu dem Bildaufnehmer 12 gelangt. Dieser Abwandlung liegt die Überlegung zugrunde, dass es sich bei dem von dem Leuchtstoffelement 76 erzeugten Licht in der Regel um Licht handelt, das langwelliger ist als das von der Lichtquelle 18 emittierte Licht.

## Patentansprüche

1. Vorrichtung zur Abbildung der Innenfläche eines Hohlraumes in einem Werkstück,
mit einer Optik, die mit einem Bildaufnehmer und einer nachgeordneten Auswertungseinrichtung in Bildübertragungsverbindung steht, und mit einer Beleuchtungsanordnung mit einer Lichtquelle zum Beleuchten eines von der Optik erfassten Abbildungsbereiches der Innenfläche,
**dadurch gekennzeichnet,**
**dass** eine Linse (22) der Optik wenigstens ein lichtemittierendes und/oder lichtlenkendes Bauteil (20, 20') der Beleuchtungsanordnung (16) trägt.

2. Vorrichtung nach Anspruch 1, **dadurch gekennzeichnet, dass** das lichtemittierende und/oder lichtlenkende Bauteil (20, 20') außerhalb eines für die Abbildung der Innenfläche (4) herangezogenen Blickfeldes der Optik (10) angeordnet ist.

3. Vorrichtung nach Anspruch 1 oder 2, **dadurch gekennzeichnet, dass** das lichtemittierende und/oder lichtlenkende Bauteil (20, 20') im Bereich eines Scheitelpunktes (28) oder an einem Scheitelpunkt an der Linse (22) der Optik (10) angeordnet ist.

4. Vorrichtung nach einem der vorherergehenden Ansprüche, **dadurch gekennzeichnet, dass** das lichtemittierende und/oder lichtlenkende Bauteil (20, 20') auf der optischen Achse (30) oder im Bereich der optischen Achse (30) der Optik (10) angeordnet ist.

5. Vorrichtung nach einem der vorherergehenden Ansprüche, **dadurch gekennzeichnet, dass** das lichtemittierende und/oder lichtlenkende Bauteil (20, 20') an dem distalen Ende (32) der Optik (10) angeordnet ist.

6. Vorrichtung nach einem der vorherergehenden Ansprüche, **dadurch gekennzeichnet, dass** das lichtlenkende Bauteil (20) wenigstens einen Spiegel (34) aufweist.

7. Vorrichtung nach einem der vorherergehenden Ansprüche, **dadurch gekennzeichnet, dass** das lichtemittierende Bauteil (20) ein Lichtquellenelement (60) ist, dem Energieversorgungsmittel (62) zugeordnet sind.

8. Vorrichtung nach Anspruch 7, **dadurch gekennzeichnet, dass** die Energieversorgungsmittel (62) derart ausgestaltet sind, dass Energie leitungsungebunden zu dem Lichtquellenelement (60) übertragbar ist oder übertragen wird.

9. Vorrichtung nach Anspruch 8, **dadurch gekennzeichnet, dass** die Energieversorgungsmittel (62) wenigstens eine Induktionsspulenanordnung (66) aufweisen.

10. Vorrichtung nach Anspruch 9, **dadurch gekennzeichnet, dass** wenigstens eine Spule der Induktionsspulenanordnung (66) außerhalb eines für die Abbildung der Innenfläche (4) herangezogenen Blickfeldes der Optik (10) angeordnet ist.

11. Vorrichtung nach Anspruch 10, **dadurch gekennzeichnet, dass** die Spule eine Empfangsspule (70) ist.

12. Vorrichtung nach einem der vorherergehenden Ansprüche, **dadurch gekennzeichnet, dass** das Lichtquellenelement (60) über wenigstens eine Versorgungsleitung (64, 64') mit den Energieversorgungsmitteln (62) verbunden ist.

13. Vorrichtung nach Anspruch 12, **dadurch gekennzeichnet, dass** eine Elektrode (72, 72') zur elektrischen Verbindung der Versorgungsleitung (64, 64') mit dem Lichtquellenelement (60) aus einem optisch transparenten Material besteht.

14. Vorrichtung nach Anspruch 13, **dadurch gekennzeichnet, dass** wenigstens eine Elektrode (72, 72') eine Beschichtung (74) der Linse (22) der Optik (10) bildet.

15. Vorrichtung nach einem der vorherergehenden Ansprüche, **dadurch gekennzeichnet, dass** das lichtemittierende Bauteil (20) wenigstens ein Leuchtstoffelement (76) aufweist, das bei Anregung mit elektromagnetischer Strahlung Licht erzeugt.

16. Vorrichtung nach einem der vorherergehenden Ansprüche, **dadurch gekennzeichnet, dass** die Beleuchtungsanordnung (16) relativ zu der Optik (10) derart angeordnet und ihr Strahlengang derart gewählt ist, dass ein erster axialer Abschnitt des Abbildungsbereiches in der Hellfeldbeleuchtung und gleichzeitig ein zu dem ersten axialen Abschnitt beabstandeter zweiter axialer Abschnitt des Abbildungsbereiches in Dunkelfeldbeleuchtung beleuchtbar ist oder beleuchtet wird.

17. Vorrichtung nach einem der vorhergehenden Ansprüche, **dadurch gekennzeichnet, dass** die Optik (10) einen Rundumblick hat.

18. Vorrichtung nach einem der vorhergehenden Ansprüche, **dadurch gekennzeichnet, dass** die wenigstens ein lichtemittierendes und/oder lichtlenkendes Bauteil (20, 20') tragende Linse (22) eine Frontlinse (24) der Optik (10) ist.
